# EUROPEAN PATENT APPLICATION

(11) **EP 4 800 498 A1**
(43) Date of publication of application: **02.09.2026**
(21) Application number: 26160280.9
(22) Date of filing: 24.02.2026
(51) Int. Cl.: G05B 19/418, B65B 57/00

(54) **METHOD AND SYSTEM FOR MONITORING THE OPERATION OF A PACKAGING LINE, PACKAGING LINE AND COMPUTER PROGRAM PRODUCT THEREOF AND METHOD FOR READING IDENTIFICATION CODES ON PACKAGES FORMED BY A PACKAGING LINE**

(30) Priority: 27.02.2025 IT 202500004020
(71) Applicant: Tetra Laval Holdings & Finance S.A., 1009 Pully (CH)
(72) Inventor: Bulgarelli, Daniele, 41123 Modena (IT); Singh, Tajinder, 41123 Modena (IT); Modelli, Michele, 41123 Modena (IT); Tortora, Daniele, 41123 Modena (IT); Cavani, Sara, 41123 Modena (IT)
(74) Representative: Tetra Pak Patent Attorneys

(57) **Abstract**

Method for monitoring the operation of a packaging line (200) configured to output packages (300), the method comprising the steps of: acquiring **(S400)** data relative to the production process of one or more packages carried out by the packaging line; processing **(S401)** the acquired data to determine the occurrence of a possible deviation in one or more steps of the production process carried out by the packaging line (200); determining **(S402)** a number of checks to be performed on a respective package (300) as a function of the possible deviation determined; and printing **(S403)** a unique identification code (500) on the respective package (300), the unique identification code (500) integrating at least a portion **(501, 502)** of the data acquired as well as the number of checks.

## Description

### TECHNICAL FIELD OF THE INVENTION

The invention generally relates to the field of monitoring the operation of a packaging line, in particular to a method and a system for monitoring the operation of a packaging line, as well as a packaging line and a computer program thereof. Furthermore, the present invention also relates to a method for reading identification codes printed on packages formed by a packaging line.

### STATE OF THE ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic^{®}, which is made by sealing and folding a laminated packaging material.

The packaging material has a multilayer sheet structure substantially comprising one or more stiffening and strengthening base layers typically made of a fibrous material, *e.g.* paper or cardboard, or mineral-filled polypropylene material, covered on both sides with one or more heat-sealable layers, *e.g.* polyethylene film. In the case of aseptic packages for long-storage products, such as UHT milk, the packaging material also comprises a gas- and light-barrier material layer, *e.g.* aluminum foil or ethyl vinyl alcohol (EVOH) film, which is superimposed on a heat-sealable layer, and is in turn covered with another heat-sealable layer forming the inner face of the package eventually contacting food product.

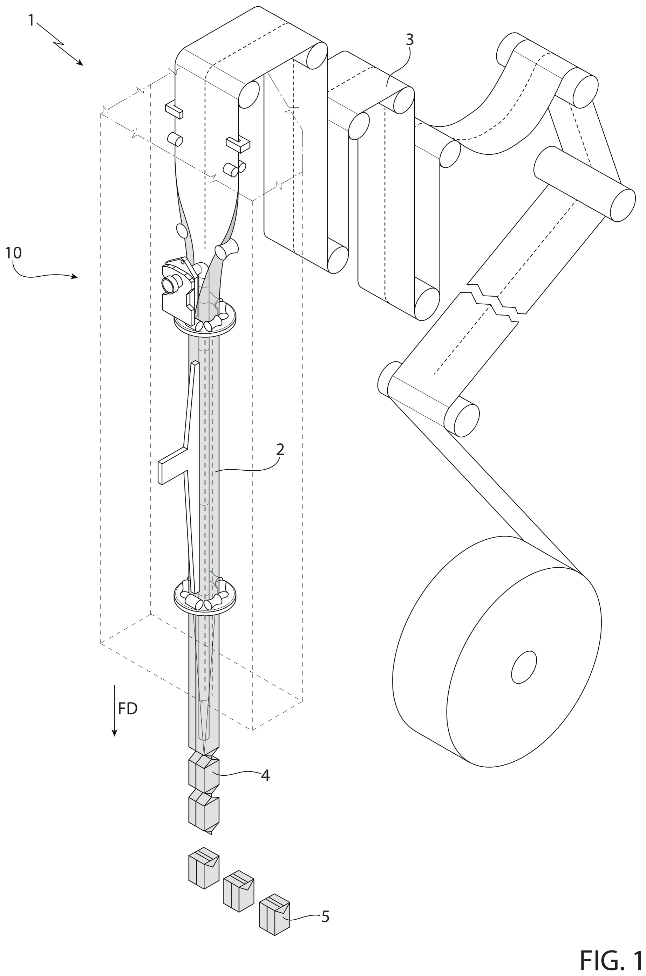

Packages of this type are normally produced on fully automatic packaging machines, also known as packaging or filling machines, of the type shown in Figure 1 as a non-limiting example and referenced as a whole with reference numeral **1,** and being part of a packaging line **10;** in particular, a continuous (vertical) tube **2** is formed from a packaging web **3,** in particular by overlapping opposite edges thereof through a folding and sealing unit **4,** wherein the tube **2** is sterilized in an aseptic or isolation chamber of the packaging machine **1** by applying, *e.g.* a chemical sterilizing agent such as a hydrogen peroxide solution, or physical sterilization, such as by means of an electron beam. Once sterilization is completed, any residue, in particular left by the chemical sterilizing agent, is removed, *e.g.* evaporated by heating, from the surfaces of the packaging material. The packaging web **3** is maintained in a closed, sterile environment, in particular within an isolation chamber (not shown) and is folded and then heat-sealed longitudinally to form the tube **2.**

The tube **2,** advancing along a direction **FD,** is filled with a sterilized or sterile-processed pourable food product by means of a filling pipe extending inside the tube **2.** The tube **2** is advanced along a (vertical) advancing direction to a forming station, where it is gripped along equally spaced transversal sections by a jaw system including two or more pairs of jaws acting cyclically and successively on the tube **2** to form a continuous sequence of packs, here pillow packs, **4** connected to one another by transverse sealing bands. The packs **4** are then separated from one another by cutting the sealing bands and are conveyed to a folding station, where they are folded mechanically into finished, *e.g.* substantially parallelepiped-shaped, packages or food packages **5.**

During operation of the packaging line, packages can be sampled for quality check. In particular, the sampling plan is currently based on the number of packages being produced by the packaging machine. Although working satisfyingly well, a need is felt to improve the monitoring of the operation of the packaging line, in particular of the sampling thereof.

### OBJECT AND SUMMARY OF THE INVENTION

A need is felt to provide for a method and a system to automatically determine the occurrence of an anomaly in operation of the packaging machine, in particular starting from the status of the packages produced by the latter, and provide means for early warning of the occurrence of conditions that would lead to a possible deviation in at least a part of the packaging machine and, thus, in the packaging process.

Thus, a desire is felt in the sector to provide for a method and a system for monitoring the operation of a packaging line, as well as a packaging line and a computer program thereof; furthermore, a desire is also felt to provide for a method for reading identification codes printed on packages formed by a packaging line.

The aim of the present invention is hence to develop a method and a system for monitoring the operation of a packaging line, as well as a packaging line and a computer program thereof and a method for reading identification codes printed on packages formed by a packaging line, thereby solving at least part of the abovementioned inconveniences.

This aim is achieved by the present invention which relates to a method and a system for monitoring the operation of a packaging line, as well as a packaging line and a computer program thereof and a method for reading identification codes printed on packages formed by a packaging line, as claimed in the appended claims.

### BRIEF DESCRIPTION OF THE DRAWINGS

Figure 1 shows a perspective view, with parts removed for clarity, of a packaging machine operable to produce sealed packages containing pourable food products from a tube of packaging material.
Figure 2 shows a packaging line comprising a system for monitoring the operation of the packaging line according to the present invention.
Figure 3 schematically shows a flow chart of a method for monitoring the operation of the packaging line according to the present invention.
Figure 4 schematically shows a flow chart of a method for reading an identification code printed on a package formed by a packaging line according to the present invention

### DETAILED DESCRIPTION OF THE INVENTION

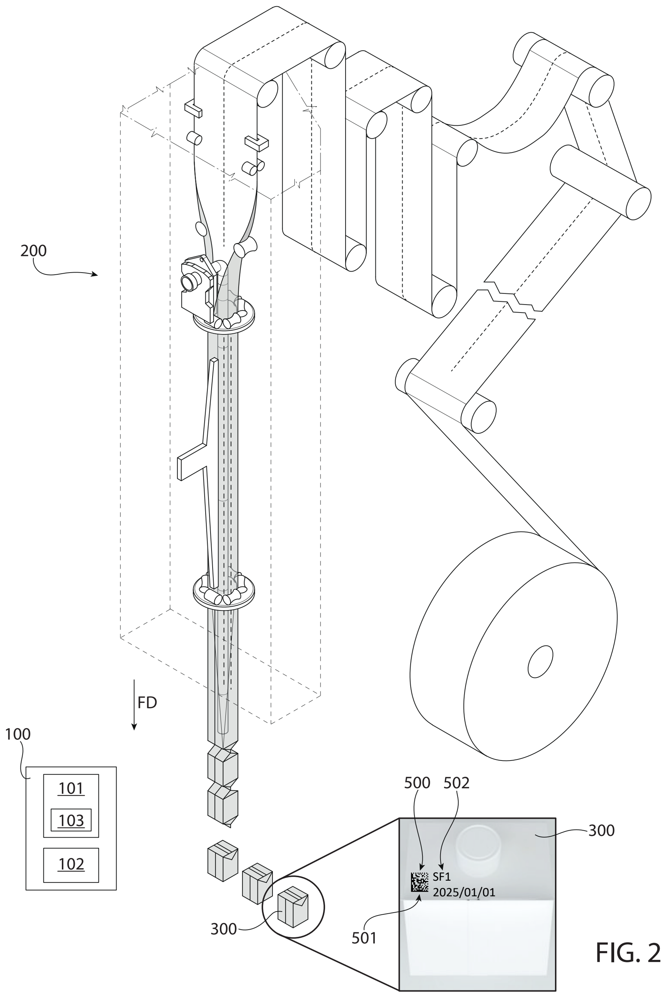

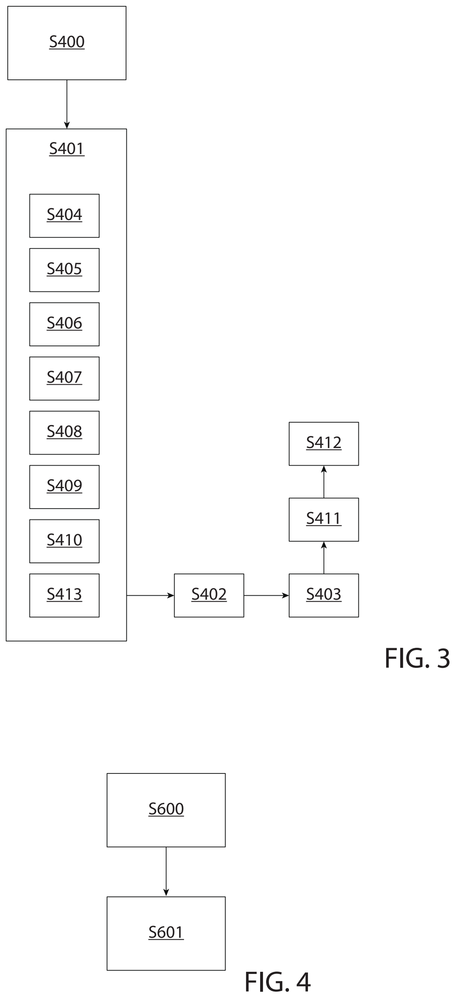

Figure 2 shows a system **100** for monitoring the operation of (*e.g.* in) a packaging line **200,** the latter being configured to output packages **300;** in particular, Figure 2 shows a portion of the packaging line **200,** in particular the filling or packaging section of it, by way of example and thus in a non-limiting way. In particular, the system **100** comprises:
- a sensory system **101** configured to acquire (block **S400** in Figure 3) data relative to the production process and/or the behavior of one or more stages of the packaging line **200** of one or more packages **300** carried out by the packaging line **200;** and
- electronic processing resources **102** configured to be in communication with the sensory system **101.**

As better disclosed in the following paragraphs, the sensory system **101** is configured to acquire (block **S400),** for each package **300,** data relative to process parameters and/or machine behavior parameters associated with one or more steps of the production process carried out by the packaging line **200** for producing the one or more packages **300.** On this regard, according to another aspect of the present invention, the sensory system **101** comprises one or more sensors **103** each configured to acquire data relative to respective quantities relative to the production process of the packages **300;** for example, the one or more sensors **103** comprise one or more cameras, a temperature sensor, a pressure sensor, an electrical current sensor and the like, each configured to sense a respective quantity (*e.g.,* temperature, pressure, electrical current and the like). According to an aspect of the present invention, not limiting to the latter, the one or more sensors **103** comprise only one or more cameras.

According to an aspect of the present invention, the electronic processing resources **102** are of a local type, *e.g.* they are implemented as a local unit; according to a further and alternative aspect of the present invention, electronic processing resources **102** are of a distributed type, *e.g.*, on nodes in a network, and implementing paradigms such as cloud computing. Without it limiting to the present invention, the electronic processing resources **102** are hereinafter of the local type.

Referring in conjunction to Figures 2 and 3, the electronic processing resources **102** are configured to:
- receive and process (block **S401)** the acquired data to determine the occurrence of a possible deviation in one or more steps of the production process carried out by the packaging line **200,** *i.e.* the occurrence of a possible deviation in one or more stages of the packaging line **200;**
- determine (block **S402)** a number of checks to be performed on a respective package **300** as a function of the possible determined deviation; and
- command (block **S403)** the printing of one or more identification codes **500** on the respective package **300,** the identification codes **500** indicative of at least a portion of the data acquired as well as the number of checks.

According to an aspect of the present invention, the portion of the acquired data is indicative of the detected deviation. In further detail, according to an aspect of the present invention, each identification code **500** may comprise a first identification code portion **501** in the form of a bi-dimensional code, *e.g.* data matrix, QR code or the like, and/or a second identification code portion **502** in the form of an alphanumeric code. The identification codes **500** may be indicative of data relative to the production process of the package **300** to which it is printed to and/or data relative to the number of checks to be performed. For example, the system **100** may comprise a database, configured to store data relative to the production process and/or data relative to the number of checks to be performed associated with the respective identification code **500.** Such data may be retrieved by scanning the identification code **500.** Thus, each identification code **500** is indicative of several information, which can be scanned and interpreted for several operation, disclosed in further detail in the following; by way of example and without it being limiting to the present invention, the identification codes **500** allow to facilitate sampling and/or early-warning procedures to avoid the occurrence of deviations in the production process of the packaging line **200.**

In particular, according to a further aspect of the present invention, the sensory system **101** is further configured to acquire (block **S400),** for each package **300,** at least one among data relative to operation of the packaging line **200** wherein the one or more packages **300** are collected, data relative to an event related to the deviation from a standard condition for the operation of the packaging line **200** and data relative to a counter of sampled packages associated with the corresponding package **300.**

Furthermore, the electronic processing resources **102** are configured to process (block **S401)** the acquired data by processing (block **S404)** the acquired data for a plurality of packages **300** in the production process carried out by the packaging line **200** to determine a deviation of the production process carried out by the packaging line **200** from standard conditions, e.g. when the parameters characterizing the production process, either relating to the process and/or the behavior of the machines in the packaging line **200,** deviate from predetermined, standard values. To better understand the present invention, referring to Figure 2, the packaging line **200** is configured to output the plurality of packages **300,** each eventually bearing a respective deviation from standard condition, *i.e.* bearing a defect due to a deviation of one or more stages of the production process that lead to a defective package **300;** for example, a package **300** may deviate from a standard condition if a defect, due for example to a deviation of one or more process parameters from predetermined values and/or ranges, is determined to be present based on the data acquired by the sensory system **101.** Consequently, it may occur that one or more packages **300** may present said deviation, for example successive packages **300** may exhibit the same type of deviation, meaning that a deviation of the abovementioned process parameters and/or machine behavior parameters is determined to be present.

Furthermore, the electronic processing resources **102** are configured to process (block **S401)** the acquired data for at least two packages **300** by:
- processing (block **S405)** the acquired data related to a first package **300A** to determine if the production process carried out by the packaging line **200** when producing the first package **300A** deviated from a standard condition; and
- processing (block **S406)** the acquired data related to a second package **300B** to determine if the production process carried out by the packaging line **200** when producing the second package **300B** deviated from a standard condition, the second package **300B** being produced after to the first package **300A** in the production process carried out by the packaging line **200.** For example, packages with anomalies can be successive, or packages with anomalies may be observed with intervals of packages with no anomalies in between.

It is noted that the abovementioned operations are performed for a number of packages **300,** so that the electronic processing resources **102** verify multiple packages **300** to guarantee that an actual deviation is present in the packages **300** themselves and, thus, in one or more stages of the packaging line **200.**

The electronic processing resources **102** are configured to process (block **S401)** the acquired data by applying (block **S407)** a classification model to the acquired data to output one or more classes, for example a first and a second class **C₁**, **C₂**, indicative of the presence or the absence of a possible deviation in one or more steps of the production process carried out by the packaging line **200** . In this way, the electronic processing resources **102** are configured to provide for means that allow for early warnings, *i.e.* to provide assistance to users to identify deviations beforehand based on the acquired data by the sensory system **101.**

According to an aspect of the present invention, the classification model is obtained after training a dedicated algorithm, loaded in and executable by the electronic processing resource **102,** on a set of training data, the latter being a database including data relative to the production process and/or the machine behavior of the packaging line **200** of the packages **300;** for instance, the set of training data comprise data associated with the presence and absence of deviations from standard conditions, *i.e*. the data is heterogeneous and is known to be associated to a certain condition. According to an aspect of the present invention, in case the algorithm is trained in a supervised manner, each data of the set of training data is associated with respective labels, the latter being related to the presence/absence of anomalies. Thus, electronic processing resource **102** are configured to obtain the classification model by:
- providing a portion of data from the set of training data with the associated labels to the algorithm in order for the latter to classify each data and, thus, determine a classification model;
- classifying the remaining data of the set of training data by means of the classification model, the remaining data being provided without the respective labels;
- evaluating the accuracy of the classification model based on the classification operated by the algorithm and the labels associated with the remaining data; and
- refining the classification model based on the calculated accuracy, *i.e.* re-training the classification model on the basis of the calculated accuracy.

According to a further aspect of the present invention, the algorithm may also be trained in an unsupervised or partially supervised manner, meaning that the set of training data may be either fully non-labelled (unsupervised) or at least partially labelled (partially supervised). In these cases, the classification model may be obtained, *e.g.*, by providing training data only related to the presence or absence of anomalies, so that the algorithm may recognize such anomalies based on the provided data.

In this way, the system **100** is able to determine the occurrence of a possible deviation in the production process of the packages **300** by processing the acquired data; therefore, the present system **100** is able to operate a prediction of the outcome of the production process implemented by the packaging line **200** by analyzing the process parameters and/or the machine behavior parameters of the packaging line **200** and performing several operations, such as sampling or notification of the user of the occurrence of a possible deviation, based on said prediction.

According to an aspect of the present invention, the electronic processing resources **102** are configured to determine (block **S401)** the occurrence of a possible deviation by checking (block **S408)** if the process parameters and/or the machine behavior parameters deviate from respective predetermined ranges; in other words, the electronic processing resources **102** are configured to determine if the process parameters and/or the machine behavior parameters fulfil a deviation criterion relative to the occurrence of a possible deviation. According to another aspect of the present invention, the electronic processing resources **102** are configured to determine (block **S401)** the occurrence of a possible deviation by verifying if the process parameters and/or the machine behavior parameters satisfy respective further predetermine conditions, for example check the temperature at the sealing area where the strip is to be applied/is applied.

Furthermore, according to a further aspect of the present invention, the electronic processing resources **102** are configured to determine (block **S401)** the occurrence of a possible deviation by processing data provided by the sensory system **101.**

The electronic processing resources **102** are configured to determine (block **S401)** the occurrence of a possible deviation also by identifying (block **S409)** a trend in the acquired data indicative of the occurrence of the possible deviation, *i.e.* if a sequence of packages **300** exhibit each a deviation, in particular of the same type (*e.g.* continuous presence of deviations reflecting on the packages **300** after a certain time interval, depending on whether the packaging line **200** is in production or portions of it experience certain events, such as occurrence of splices, the time interval being either considerable, meaning that deviations stretch for a non-negligible amount of time, or reduced, meaning that deviations would cause a high amount of packages **300** to be wasted or cause portions of the packaging line **200** to stop their operations). In particular, referring to Figure 2, the electronic processing resources **102** are configured to determine if a number of packages **300,** either in succession or in sequency, as also explained above, exhibit a deviation, in particular the same type of deviation, from the standard conditions; in other words, the electronic processing resources **102** are configured to recognize that the production process exhibits a deviation by the output of the packaging line **200,** *i.e.* the packages **300** presenting deviations from the standard conditions, and thus a situation wherein it is needed to correct the operation of the packaging line **200** to prevent further deviations in following packages **300** and, therefore, in the production process.

The electronic processing resources **102** are configured to determine (block **S401)** the occurrence of a possible deviation also by controlling (block **S410)** a sampling of at least one package **300** as a function of the determined deviation. In other words, the electronic processing resources **102** are configured to command the sampling of one or more packages **300** based on the determined deviation, meaning that, when multiple packages **300** are determined to exhibit a possible deviation from the standard conditions, either it being of the same type or not, the electronic processing resources **102** are configured to initiate a sampling procedure, where the following package(*s*) **300** are put aside to be inspected to verify if the deviation is actually present and, thus, if the production process has to be adjusted to prevent the occurrence of a further deviation in the same production process reflecting on the outputted packages **300.**

The electronic processing resources **102** are further configured to receive (block **S411)** at least one feedback relative to a quality check of the sampled at least one package **300.** Thus, the electronic processing resources **102** are configured to receive a feedback, for example manually from the user, to gather information relating to the outcome of the evaluation of the sampled packages **200,** *i.e.* if such packages **300** exhibited deviations or not.

The electronic processing resources **102** are further configured to adjust (block **S412)** the operation of the packaging line **200** as a function of the determined deviation and/or the received feedback, *e.g.* by modifying one or more parameters relating to the production process and/or the machine behavior of the packaging line **200** to avoid the occurrence of a possible deviation in the production process that would reflect on the produced packages **200.**

According to a further aspect of the present invention, the electronic processing resources **102** are configured to determine (block **S401)** the occurrence of the possible deviation by determining (block **S413)** a variation from a predetermined machine behavior of the packaging line **200** and/or a variation in a sensor signal indicative of the acquired data generated by the sensory system **101** and/or a variation in a predetermined state of the produced packages **300.** In other words, based on the operation of the packaging line **200,** which is continuously monitored, the electronic processing resources **102** are configured to determine the occurrence of said deviation if it is determined that a variation in any between the machine of the packaging line **100,** the sensed quantities and/or the packages **200** is present.

The system **100** further configured to implement a method for reading an identification code **500** printed on a package **300** formed by a packaging line **200,** the latter being schematically represented in Figure 4.

In particular, the electronic processing resources 102 of the system 100 are configured to:
- command the scanning (block **S600),** in particular by means of scanning means **104,** an identification code **500** of a package **300;** and
- acquire (block **S601)** data relative to the production process of one or more packages **300** carried out by the packaging line **200** from the scanned identification code **500.**

The present invention also relates to a computer program product loadable and executable by the system **100** and configured to cause, when executed, the system **100** to operate as according to what has been disclosed in the previous paragraphs.

The advantages that the present invention allows to achieve may be readily appreciated by the skilled person.

In particular, the present system **100** allows to improve current systems for determining the occurrence of deviations in the packages **300** and, thus, in the packaging line **200.**

In fact, known solutions provide means for determining the occurrence of deviations in the packages **300** which follow a sampling plan, wherein one or more packages **300** are sampled and a user is informed on which checks to carry out by entering the information on which line the package **300** was collected, the event that caused the sampling of the same one or more packages **300** and finally the operator must pay attention to the counter of sampled packages **300;** this leads to a series of operations that take time and are more prone to human error. Furthermore, the users have to be properly educated, otherwise the types of checks to be performed might not be performed. Furthermore, the need is felt to limit the positioning of the sampling system of the packaging line **200,** namely near to the filling or packaging machine of the same packaging line **200.**

By implementing the present invention, it is possible to determine the types and number of checks to be performed by scanning the identification code **500,** as the packages **300** are uniquely identified and are automatically retrieved for sampling and analysis purposes. Thus, as also disclosed in detail in the above paragraphs, the present system **100** allows to print a unique code on the package **300,** together with the other standard information, such as event letter, check area and event counter. Furthermore, by implementing the present system **100,** it is possible to provide for means for moving sampled packages **300** to desired work area. In addition, by reading the identification code **500,** it is possible to identify in a simple and unequivocal way which checks to carry out (as well as information on where the package **300** was produced, how the package **300** was produced and why it was sampled).

In addition, the present system **100** allows to implement an early-warning function, as, by means of the identification code **500** and the implementation of a dedicated computer program product, it is possible to prevent the occurrence of deviations in the production process of the packages **300** by analyzing the acquired data by the sensory system **101.**

Therefore, in view of the above, the present invention allows to:
- trace packages **300** along the production process implemented by the packaging line **100** and the process data of the distribution equipment to be associated with it by reading the one or more identification codes **500;**
- thanks to the tracing of the package **300,** it is possible to determine the presence of correlations between one or more stages of the packaging line **200;** and
- provide for early-warning functions based on the acquired data and thus the data integrated in the one or more identification codes **500** and printed on the packages **300.**

In conclusion, from the description above follows that, although various embodiments of the invention have been described and shown, the invention is not restricted thereto, but may also be embodied in other ways within the scope of the subject-matter defined in the following claims.

## Claims

1. Method for monitoring the operation of a packaging line **(200)** configured to output packages **(300),**
the method comprising the steps of:
- acquiring **(S400)** data relative to the production process of one or more packages carried out by the packaging line;
- processing **(S401)** the acquired data to determine the occurrence of a possible deviation in one or more steps of the production process carried out by the packaging line (**200**);
- determining **(S402)** a number of checks to be performed on a respective package **(300)** as a function of the possible deviation determined; and
- printing **(S403)** a unique identification code **(500)** on the respective package **(300),** the unique identification code **(500)** integrating at least a portion **(501, 502)** of the data acquired as well as the number of checks.

2. The method according to the previous claim, wherein the step of acquiring **(S400)** comprises acquiring **(S400),** for each package **(300),** data relative to process parameters and/or machine behavior parameters associated with one or more steps of the production process carried out by the packaging line **(200)** for producing the one or more packages **(300) .**

3. The method according to any one of the preceding claims, wherein the step of acquiring **(S400)** comprises acquiring, for each package **(300),** at least one among data relative to operation of the packaging line **(200)** wherein the one or more packages were collected, data relative to an event related to the deviation from a standard condition for the operation of the packaging line **(200)** and data relative to a counter associated with the corresponding package **(300).**

4. The method according to claim **2** or **3,** wherein the step of processing **(S401)** comprises the step of processing (**S404**) the acquired data for a plurality of packages **(300)** in the production process carried out by the packaging line **(200)** to determine a deviation of the production process carried out by the packaging line **(200)** from standard conditions.

5. The method according to the previous claim, wherein the step of processing **(S401)** the acquired data for at least two successive packages **(300)** comprises:
- process **(S405)** the acquired data related to a first package **(300)** to determine if the production process carried out by the packaging line **(200)** when producing the first package **(300)** deviated from a standard condition; and
- process **(S406)** the acquired data related to a second package **(300)** to determine if the production process carried out by the packaging line **(200)** when producing the second package **(300)** deviated from a standard condition, the second package **(300)** being successive to the first package **(300)** in the production process carried out by the packaging line **(200).**

6. The method according to any one of the preceding claims, wherein the step of processing **(S401)** comprises applying **(S407)** a classification model to the acquired data to output one or more classes (**C₁**, **C₂**) indicative of the presence or the absence of a possible deviation in one or more steps of the production process carried out by the packaging line **(200).**

7. The method according to any one of claims **2-6,** wherein the step of determining **(S401)** the occurrence of a possible deviation comprises checking **(S408)** if the process parameters and/or the machine behavior data deviate from respective predetermined ranges.

8. The method according to the previous claim, wherein the step of determining **(S401)** the occurrence of a possible deviation also comprises the step of identifying **(S409)** a trend in the acquired data indicative of the occurrence of the possible deviation.

9. The method according to any one of the preceding claims, wherein the step of determining **(S401)** the occurrence of a possible deviation also comprises the step of controlling **(S410)** a sampling of at least one package **(300)** as a function of the determined deviation.

10. The method according to the previous claim and further comprising receiving **(S411)** at least one feedback relative to a quality check of the sampled at least one package **(300).**

11. The method according to the previous claim and further comprising adjusting **(S412)** the operation of the packaging line **(200)** as a function of the determined deviation and/or the received feedback.

12. The method according to any one of the preceding claims, wherein the unique identification code **(500)** integrating the portion of the acquired data is indicative of the detected deviation.

13. The method according to any one of the preceding claims, wherein the step of determining **(S401)** the occurrence of the possible deviation comprises the step of determining **(S413)** a variation from a predetermined machine behavior of the packaging line **(200)** and/or a variation in a sensor signal indicative of the acquired data generated by the sensory system **(101)** and/or a variation in a predetermined state of the produced packages (**300**).

14. System **(100)** for monitoring the operation of a packaging line **(200),** the packaging line **(200)** being configured to output packages **(300),**
the system **(100)** being configured to carry out a method for monitoring the operation of the packaging line **(200)** according to any one of the previous claims.

15. Method for reading an identification code **(500)** printed on a package **(300)** formed by a packaging line (**200**),
the method comprising the steps of:
- scanning **(S600)** an identification code **(500)** of a package **(300);** and
- acquiring **(S601)** data relative to the production process of one or more packages **(300)** carried out by the packaging line from the scanned identification code **(500),**
the method being carried out by a system **(100)** for monitoring the operation of a packaging line according to the previous claim.

16. Computer program product loadable and executable by a system **(100)** for monitoring the operation of a packaging line **(200)** according to claim **14** and configured to cause, when executed, the system **(100)** to operate as according to a method for monitoring the operation of the packaging line **(200)** according to any one of claims **1-13.**
